# EUROPÄISCHE PATENTSCHRIFT

(11) **EP 1 285 828 B1**
(45) Veröffentlichungstag und Bekanntmachung des Hinweises auf die Patenterteilung: **27.07.2005**
(21) Anmeldenummer: 01119878.5
(22) Anmeldetag: 17.08.2001
(51) Int. Cl.: B60R 22/347, B60R 22/42

(54) **Vorrichtung zum Aufwickeln, Spannen und Festlegen eines Gurtbandes eines Gurtbandrückhaltesystems**
Apparatus for winding, tensioning and blocking a belt of a belt restraint system
Dispositif pour enrouler, tendre et immobiliser une ceinture d'un système de retenue

(43) Veröffentlichungstag der Anmeldung: 26.02.2003
(73) Patentinhaber: Van Riesen GmbH u. Co. KG, D-32130 Enger (DE)
(72) Erfinder: Friedrich, Matthias, 32120 Hiddenhausen (DE); Wölfl, Volkmar-Rudolf, 32602 Vlotho (DE)
(74) Vertreter: Vollmann, Heiko, Dipl.-Ing.

(56) Entgegenhaltungen:
- DE-A- 3 330 938
- DE-A- 3 421 837
- DE-A- 4 420 457
- US-A- 5 511 741

## Beschreibung

Die Erfindung betrifft eine Vorrichtung zum Abwickeln, Spannen und Festlegen eines Gurtbandes eines Gurtbandrückhaltesystems, wie sie typischerweise für Kindersitze in Kraftfahrzeugen eingesetzt wird, mit den im Oberbegriff des Anspruchs 1 angegebenen Merkmalen.

Eine derartige Vorrichtung ist in der DE-A-34 21 837 beschrieben. In einem mehrteiligen Traggestell, das an einem Fahrzeugsitz oder am Fahrzeug befestigt wird, ist ein übliches Aufwickelsystem mit einer Aufwickelrolle für ein Gurtband des Gurtbandrückhaltesystems vorgesehen, wobei die Aufwickelrolle in Aufwickelrichtung vorgespannt ist. Das Traggestell ist ferner mit zwei verschwenkbaren Klemmenbacken versehen, die das Gurtband zwischen sich einklemmen, wenn es einer starken Zugkraft ausgesetzt ist, und ferner mit Mitteln zum Lösen des Gurtbandes ausgerüstet, wenn die Zugkraft unter einen bestimmten Wert gefallen ist. Die beiden Klemmenbacken sind an einem gemeinsamen, U-förmigen Bügel angelenkt, der einerseits an einer Betätigungsstange und andererseits an einem die Aufwickelrolle tragenden Hebel angelenkt ist, wobei der Hebel mit einem die Aufwickelrolle sperrenden, auf die Fahrzeugverzögerung ansprechenden Sperrmechanismus starr verbunden ist. Wenn also auf das Gurtband eine starke Zugkraft einwirkt, wird die Aufwickelrolle durch den Sperrmechanismus an ihrer Drehung gehindert, wodurch der diese Rolle tragende Hebel angehoben wird. Die an diesem Heben befestigte Betätigungsstange betätigt dann den die Klemmenbacken tragenden Bügel, der diese Backen somit verschwenkt und dadurch das Gurtband zwischen diesen einklemmt. Eine an dem Hebel angreifende Rückholfeder stellt diesen und damit auch die Klemmenbacken zurück; wenn auf das Gurtband keine Zugkraft mehr einwirkt.

Eine ähnliche Vorrichtung ist in der US-A-5 511 741 beschrieben. Diese Vorrichtung umfasst ein zweiteiliges Gehäuse, in dessen einem Gehäuseteil das übliche, auf die Fahrzeugverzögerung ansprechende Aufwickelsystem mit der Aufwickelrolle für das Gurtband und in dessen anderem Gehäuseteil ein Klemmbackensystem mit zwei verschiebbaren Klemmenbacken für das zwischen diesen beiden Backen durchlaufende Gurtband vorgesehen ist. Das Klemmbackensystem weist zwei sich gegenüberliegende, feststehende Gleitflächen, die in Abwickelrichtung des Gurtbandes konvergent verlaufen, und die beiden sich gegenüberliegenden Klemmenbacken auf. Die beiden Klemmenbacken unterliegen einer ständigen Spreizkraft durch eine Druckfeder, sind formschlüssig miteinander gekoppelt und gleiten an ihrer Rückseite an den vorgenannten Gleitflächen. Eine mit dem fahrzeugsensitiven Aufwickelsystem zusammenwirkende Hebeleinrichtung betätigt die eine Klemmenbacke. Wirkt eine starke Zugkraft an dem Gurtband, betätigt die Hebeleinrichtung die Klemmenbacke, welche die andere Klemmenbacke mitnimmt, und beide Klemmenbacken verschieben sich in Richtung der Zugkraft, d. h. in Abwickelrichtung des Gurtbandes, entlang den konvergenten Gleitflächen, wodurch sich die Klemmenbacken aufeinander zu bewegen und dabei das Gurtband zwischen sich einklemmen. Bei Entlastung des Gurtbandes holt eine Druckfederkraft die Hebeleinrichtung zurück, so dass sich die beiden Klemmenbacken ebenfalls zurückbewegen und auseinander spreizen, wodurch das Gurtband wieder freigegeben wird.

Eine weitere Vorrichtung ist beispielsweise aus DE 44 20 457 A1 bekannt. Es handelt sich hierbei um einen sogenannten Zentralversteller für das Gurtbandrückhaltesystem eines Kindersitzes. Anders als bei Gurtbandrückhaltesystemen für Erwachsene, bei denen das Gurtband ständig unter Aufwickelspannung steht und der Bewegung der damit gesicherten Person folgt, ist es bei Gurtbandrückhaltesysteme für Kinder erforderlich, dass die Gurtbandfreigabe von der Wickelrolle nur zum Zwecke des Anschnallens erfolgt, danach jedoch das Gurtbandsystem festgelegt ist, damit das im Sitz zu sichernde Kinde stets in der bestimmungsgemäßen angeschnallten Position verharrt. Hierzu verwendet man einen sogenannten Zentralversteller, der über eine Betätigungstaste, beispielsweise unterhalb des Sitzes, freigegeben werden kann, wonach das Gurtband entgegen Federspannung abgewickelt werden kann bzw. sich durch die Federspannung der Wickelrolle selbsttätig aufrollt, so lange die Betätigungstaste gedrückt wird. Beim Loslassen der Taste wird das Gurtband festgelegt, und zwar derart, dass nach Möglichkeit auch nach mehrfacher Zugbe- und entlastung, wie dies durch die Bewegung des Kindes üblich ist, kein Schlupf entsteht. Um dies sicherzustellen, ist es bisher stets erforderlich gewesen, das Gurtband um mindestens 180° umzulenken und durch einen selbstsperrenden Klemmmechanismus zu führen. Dis hat allerdings zur Folge, dass innerhalb des Zentralverstellers auch in Freigabestellung relativ hohe Gurtbandreibung entsteht, weshalb die selbsttätige Aufwicklung schon bei geringen reibungsvergrößemden Hindernissen nicht mehr oder nur noch unzureichend funktioniert. Zwar könnte man die Aufwickelfelder verstärken, dies hätte jedoch den Nachteil, dass die Zugkräfte zum Abwickeln des Gurts und die Kräfte, mit denen sich der Gurt selbsttätig anlegt, zu hoch wären. Der vorgenannte Effekt wird häufig noch durch die Anordnung des Zentralverstellers verstärkt, da dieser üblicherweise im Bereich unter der Sitzfläche angeordnet ist. Der dort aufgewickelte Gurt wird also aus dem Zentralversteller laufend zur Rückenlehne nach oben umgelegt, wo er in zwei Schultergurte überführt wird, die nahe der Oberseite aus dem in diesem Bereich gepolsterten Sitz austreten. Dabei wird die Reibung im Bereich des Austritts häufig durch Polsterteile verstärkt.

Vor diesem Hintergrund liegt der Erfindung die Aufgabe zugrunde; eine gattungsgemäße Vorrichtung so auszubilden, dass die vorgenannten Nachteile vermieden werden. Dabei sollen die Herstellungskosten nach Möglichkeit weiter gesenkt werden.

Diese Aufgabe wird gemäß der Erfindung durch die im Anspruch 1 angegebenen Merkmale gelöst.

Die vorerwähnten bekannten Vorrichtungen verwenden vorzugsweise schwenkbeweglich angeordnete Klemmbacken, die so angeordnet sind, dass das Gurtband zwischen der Klemmbacke und einer darunter befindlichen Anlagefläche oder zwischen den Klemmbacken durch Einschwenken der Klemmbacke(n) festgelegt wird. Dabei ist/sind die Klemmbacke(n) und die Anlagefläche so strukturiert und oberflächenbeschaffen, dass das darin festgeklemmte Gurtband zuverlässig gehalten und gegen Mikroschlupf gesichert ist. Konstruktionsbedingt wirken solche Klemmanordnungen nur in einer Richtung kraftverstärkend. Dies muss notwendigerweise bei Gurtbandrückhaltesystemen die Richtung sein, in welcher das Gurtband im Belastungsfall beansprucht wird. Da jedoch in Gegenrichtung stets die Spannfeder der Wickelrolle wirksam ist, kann eine solche Klemmbackenfeststellung bei Zentralverstellern für Kinderrückhaltesysteme ohne besondere Vorkehrungen nicht eingesetzt werden, da die Gefahr bestünde, dass sich die Klemmbacke(n) durch die Federkraft von selbst löst. Dieses Problem löst die vorliegende Erfindung dadurch, dass die zweite Klemmbacke so vorgesehen ist, dass sie in Gegenrichtung, also in Aufwickelrichtung, klemmkrafterhöhend wirkt. Dabei sind die beiden Klemmbacken mechanisch miteinander bewegungsgekopppelt, so dass die Betätigung einer Klemmbacke genügt, um die Klemmwirkung beider Backen aufzuheben.

Die erfindungsgemäße Lösung hat den weiteren Vorteil, dass das Gurtband ohne Richtungsumkehr und ohne komplizierte Gurtbandführungen innerhalb der Vorrichtung geführt werden kann, wodurch die Reibung zwischen Gurtband und Vorrichtung deutlich vermindert werden kann. Darüber hinaus kann die Vorrichtung kostengünstig aufgebaut werden, da die Klemmbacken durch eine einfache mechanische Kopplung, die zumindest in Öffnungsrichtung wirkt, miteinander bewegungsverbunden sind. Der konstruktive Aufbau, insbesondere der Steuermechanismus zum Öffnen, ist einfach und kostengünstig zu realisieren.

Eine solche mechanische Kopplung der Klemmbacken kann durch einfache Vorsprünge an den Klemmbacken gebildet sein, die jeweils zur anderen Klemmbacke gerichtet sind und mit dieser in Eingriff stehen, derart, dass bei einer Schwenkbewegung der einen Klemmbacke in Öffnungsrichtung die andere Klemmbacke in Öffnungsrichtung mitgenommen wird. Grundsätzlich kann eine solche mechanische Kopplung auch in Schließrichtung vorgesehen sein, bevorzugt sind jedoch die Klemmbacken in Schließrichtung jeweils mit einer gesonderten Feder kraftbeaufschlagt, so dass an die mechanische Kopplung der Klemmbacken keine besonderen Anforderungen zu stellen sind, d. h. diese mit vergleichsweise großen Toleranzen gefertigt werden können.

Die Mittel zum Lösen der Klemmbacken können konstruktiv wenig aufwändig gestaltet sein, wenn an einer Klemmbacke ein Hebel angeformt ist. Es muss dann lediglich eine geeignete mechanische Verbindung zu diesem Hebel gebildet werden, um mittels einer von außen am Sitz zugänglichen Taste oder einer sonstigen Handhabe die Klemmbacken zum Zwecke des Anlegens des Gurtbandes zu öffnen.

Um insbesondere für den geöffneten Zustand (Freigabestellung) eine möglichst reibungsarme Führung des Gurtbandes innerhalb der Vorrichtung zu gewährleisten, ist es vorteilhaft, das Gurtband ohne Richtungsumkehr und möglichst geradlinig innerhalb der Vorrichtung zu führen. So werden Wickelrolle und Klemmbacken zweckmäßigerweise hintereinander angeordnet. Eine solche Anordnung ist auch aus konstruktiven Gründen zu bevorzugen. Als Traggestell kann ein Blechformteil dienen, das einen im Wesentlichen U-förmigen Querschnitt aufweist, wobei die Wickelrolle und die Klemmbacken innerhalb dieses Profils hintereinander angeordnet und in dem Profilschenkeln gelagert sind.

Die Klemmbacken können grundsätzlich aus jedem geeigneten Material bestehen, beispielsweise als Kunststoffspritzgussteile ausgebildet sein, besonders vorteilhaft ist es jedoch, wenn diese durch Abschnitte von Leichtmetallstrangprofilen gebildet sind, da solche Profile kostengünstig als Meterware, beispielsweise aus Aluminium oder anderen Leichtmetallen oder deren Legierungen, hergestellt werden können, eine hohe Maßhaltigkeit aufweisen und vergleichsweise große Kräfte aufnehmen können. Dabei werden die Vorsprünge der Klemmbacken und der ggf. vorzusehende Hebel vorzugsweise ebenfalls mit im Profil ausgebildet, so dass sich diese Bauteile auch über die gesamte Breite der Klemmbacken erstrecken. Hierdurch wird nicht nur die Fertigung vereinfacht, sondern auch die Gesamtstabilität der Klemmbacken sowie die Stabilität der mechanischen Kopplung der Klemmbacken über die Vorsprünge erhöht.

Während die Wickelrolle zweckmäßigerweise über eine Spiralfeder vorgespannt wird, die mehrere federkrafterzeugte Umdrehungen der Wickelrolle ermöglicht, werden die Klemmbacken vorzugsweise mittels je einer Schraubenfeder vorgespannt, die sich einerseits auf einer im Traggestell gelagerten Achse und andererseits an der Innenseite einer entsprechenden Ausnehmung der Klemmbacke abstützt und diese in Schfießrichtung vorspannt. Die Feder sitzt also zwischen Klemmbacke und deren Achse und ist vollständig geschützt durch diese Bauteile.

Die Erfindung ist nachfolgend anhand eines in der Zeichnung dargestellten Ausführungsbeispiels näher erläutert. Es zeigen:
- Fig. 1: in schematischer Darstellung eine Draufsicht auf eine Vorrichtung nach der Erfindung und
- Fig. 2: einen Schnitt längs der Schnittlinie II-II in Fig. 1.

Bei der anhand der Figuren dargestellten Vorrichtung handelt es sich um einen Zentralversteller für das Gurtbandrückhaltesystem eines Kindersitzes.

Die Vorrichtung weist ein im Querschnitt im Wesentlichen U-förmiges Traggestell 1 auf, dass aus Blech geformt ist. Das Traggestell 1 weist zwei Schenkel 2 und 3 auf, die parallel zueinander angeordnet und durch einen, den Boden der Vorrichtung bildenden Steg 4 miteinander verbunden sind. In Höhe des Stegbereichs sind zwei sich von den Außenseiten der Schenkel 2 und 3 erstreckende Flansche 5 vorgesehen, die zur Befestigung der Vorrichtung am Sitz bzw. am Fahrzeug ausgebildet sind. Hierzu weisen die Flansche 5 zwei bohrungsähnliche Ausnehmungen 6 auf.

Innerhalb des Traggestells 1 ist eine Welle 7 zwischen den Schenkeln 2 und 3 drehbar gelagert, welche eine Wickelrolle 8 trägt, die zum Aufwickeln eines Gurtbandes 9 vorgesehen ist. Die Welle 7 ragt an der Außenseite des Schenkels 3 in ein dort seitlich angeordnetes Federgehäuse 10 und ist dort mit dem einen Ende einer nicht dargestellten Spiralfeder (Aufwickelfeder) verbunden, dessen anderes Ende gehäuseseitig festgelegt ist. Hierdurch ist die Welle 7 mit der darauf sitzenden Wickelrolle 8 in Aufwickelrichtung 11 vorgespannt. Um sicherzustellen, dass das Gurtband 9 nicht solange aufgewickelt wird, bis die Aufwickelfeder völlig entspannt ist, ist ein Anschlag 12 vorgesehen, welcher die Höhe des auf der Wickelrolle 8 aufgewickelten Gurtbandwickels begrenzt.

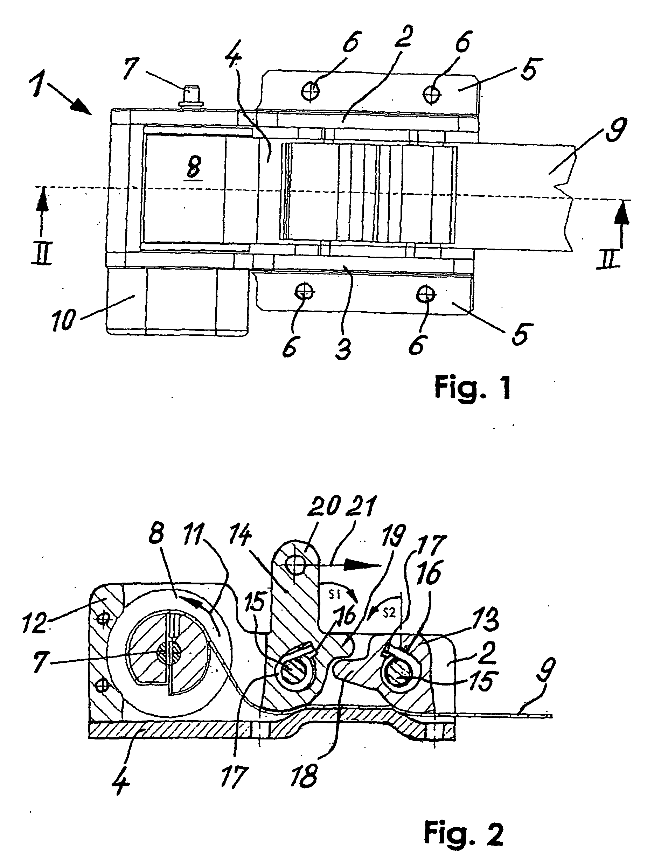

Weiterhin sind zwischen den Schenkeln 2 und 3 eine erste Klemmbacke 13 sowie eine zweite Klemmbacke 14 schwenkbar gelagert. Die zweite Klemmbacke ist zwischen der Wickelrolle 8 und der ersten Klemmbacke 13 angeordnet, die Schwenkachsen der Klemmbacken sind parallel zur Drehachse der Wickelrolle 8 angeordnet und verlaufen quer zum Gurtband 9. Die Klemmbacken 13 und 14 sind jeweils über Achsen 15 innerhalb des Traggestells 1 gelagert, deren Enden in den Schenkeln 2 und 3 des Traggestells liegen. Die Klemmbacken 13 und 14 sind aus Abschnitten von Leichtmetallstrangprofilen gebildet, deren Querschnittskonturen aus Fig. 2 ersichtlich sind. Sie weisen jeweils eine Ausnehmung 16 auf, die im Wesentlichen kreisrund ist und eine Nut aufweist. Die Ausnehmung 16 ist so dimensioniert, dass sie die zugehörige Achse 15 mit Spiel aufnimmt. In diesem Bereich zwischen Achse 15 und Ausnehmung 16 ist eine Schraubenfeder 17 angeordnet, deren eines Ende traggestellseitig festgelegt ist und deren anderes Ende in der Nut der Ausnehmung 16 formschlüssig liegt. Die zwischen der Achse 15 und der Ausnehmung 16 so eingegliederte Schraubenfeder 17 wirkt als Torsionsfeder und ist so angeordnet, dass sie die jeweilige Klemmbacke 13 bzw. 14 in Feststellrichtung beaufschlagt.

Die Klemmbacken 13 und 14 sind in an sich bekannter Weise im Querschnitt exzentrisch ausgebildet, so dass sie das Gurtband innerhalb des Traggestells 1 selbsttätig festlegen. Hierzu ist im Bereich des Stegs 4 das Traggestell 1 mit entsprechenden Auflageflächen versehen, wie in Fig. 2 dargestellt ist. Die Klemmbacken 13 und 14 sind so angeordnet, dass die Klemmbacke 13 in Aufwickelrichtung 11 selbsttätig klemmend und die Klemmbacke 14 in Gegenrichtung, also in Belastungsrichtung, selbsttätig klemmend ist.

Die Klemmbacken 13 und 14 sind in Öffnungsrichtung miteinander mechanisch verbunden. Hierzu weist die Klemmbacke 13 einen zur Klemmbacke 14 hin gerichteten Vorsprung 18 und die Klemmbacke 14 einen zur Klemmbacke 13 hin gerichteten Vorsprung 19 auf. Dabei ist der Vorsprung 19 oberhalb des Vorsprungs 18 angeordnet und beide Vorsprünge greifen zahnartig kämmend ineinander.

Wenn die Klemmbacke 14 in Öffnungsrichtung (Schwenkrichtung S 1) bewegt wird, so drückt der Vorsprung 19 den Vorsprung 18 der ersten Klemmbacke 13 nach unten, wodurch letztere ebenfalls in Öffnungsrichtung (Schwenkrichtung S 2) geschwenkt wird. Die Klemmbacken 13 und 14 sind somit in Öffnungsrichtung, d. h. in Freigaberichtung des Gurtbandes 9 bewegungsgekoppelt. Zum Auslösen der Freigabestellung ist es daher lediglich erforderlich, die Klemmbacke 14 zu betätigen. Hierzu ist an der Klemmbacke 14 ein Hebel 20 angeformt. Zum Verbringen der Vorrichtung in Freigabestellung ist also lediglich der Hebel 20 in Richtung 21 zu betätigen, wonach die Klemmbacken im Klemmbereich (in Fig. 2 dort, wo der Steg zur Bildung der erwähnten Anlageflächen erhöht ausgebildet ist) öffnen, d. h. das Gurtband 9 freigebend schwenkend. Die Rückstellung erfolgt selbsttätig durch die Schraubenfedern 17. Es ist ersichtlich, dass zur Betätigung des Hebels 20 zahlreiche mechanische Möglichkeiten gegeben sind; so kann dieser über einen Draht durch Zug in Richtung 21 kraftbeaufschlagt oder durch einen Hebel druckbeaufschlagt werden. Es sind dabei keine gesonderten Rückstellmittel vorzusehen, da die Rückstellung durch die Torrsionswirkung der Federn 17 erfolgt.

Durch Betätigung des Hebels 20 in Richtung 21 schwenkt die Klemmbacke 14 in Richtung S 1 und die Klemmbacke 13 in Richtung S 2 aus, wodurch der Abstand zwischen den Klemmbacken und dem Steg 4 vergrößert und das Gurtband 9 freigegeben wird. Es läuft dann ohne Richtungsumkehr von dem in den Figuren rechts liegenden Einlauf an den Klemmbacken 13 und 14 vorbei im Wesentlichen gradlinig zur Wickelrolle 8. Die erwähnte Aufwickelfeder übt dabei eine Kraft in Richtung 11 aus, gegen die Gurtband 9 von der Rolle abgewickelt werden kann, wie dies zum Anschnallen eines Kindes im Kindersitz erforderlich ist. Sobald das Gurtschloß geschlossen und das Kind innerhalb des Gurtbandrückhaltesystems fixiert ist, wird der Hebel 20 losgelassen, wonach beide Klemmbacken 13 und 14 durch Federkraft rückschwenken und das Gurtband innerhalb der Vorrichtung festlegen, so dass keine Aufwickelkraft mehr auf das Gurtbandrückhaltesystem wirkt.

### Bezugszeichenliste

- 1: Traggestell
- 2: Schenkel
- 3: Schenkel
- 4: Steg
- 5: Flansche
- 6: Ausnehmungen
- 7: Welle
- 8: Wickelrolle
- 9: Gurtband
- 10: Federgehäuse
- 11: Aufwickelrichtung
- 12: Anschlag
- 13: erste Klemmbacke
- 14: zweite Klemmbacke
- 15: Achsen
- 16: Ausnehmungen
- 17: Schraubenfedern
- 18: Vorsprung der ersten Klemmbacke
- 19: Vorsprung der zweiten Klemmbacke
- 20: Hebel
- 21: Betätigungsrichtung zum Öffnen
- S 1: Schwenkrichtung
- S 2: Schwenkrichtung

## Patentansprüche

1. Vorrichtung zum Aufwickeln, Spannen und Festlegen eines Gurtbandes (9) eines Gurtbandrückhaltesystems, insbesondere für Kinder, mit einem Traggestell (1), das zur sitz- oder fahrzeugseitigen Befestigung vorgesehen ist, mit einer im Traggestell (1) gelagerten Rolle (8) zum Aufwickeln des Gurtbandes (9), die in Aufwickelrichtung (11) vorgespannt ist, mit zwei im Traggestell (1) angeordneten und das Gurtband (9) selbsttätig festlegenden Klemmbacken (13, 14) und mit Mitteln (20) zum Lösen der Klemmbacken, wobei die beiden Klemmbacken mechanisch miteinander bewegungsgekoppelt sind, **dadurch gekennzeichnet, dass** - in Aufwickelrichtung (11) gesehen - die erste Klemmbacke (13) das Gurtband (9) in Aufwickelrichtung (11) selbsttätig festgelegt und die zweite Klemmbacke (14) das Gurtband (9) in Abwickelrichtung selbsttätig festlegt.

2. Vorrichtung nach Anspruch 1, **dadurch gekennzeichnet, dass** die Klemmbacken (13, 14) schwenkbar innerhalb des Traggestells (1) angeordnet und in Klemmrichtung federvorgespannt sind.

3. Vorrichtung nach Anspruch 1 oder 2, **dadurch gekennzeichnet, dass** die Klemmbacken (13, 14) über zwei, jeweils zur anderen Klemmbacke weisende und miteinander im Eingriff stehende Vorsprünge (18, 19) zumindest in Öffnungsrichtung (S 1, S 2) der Klemmbacken (13, 14) bewegungsgekoppelt sind.

4. Vorrichtung nach Anspruch 1, 2 und 3, **dadurch gekennzeichnet, dass** an einer (14) der Klemmbacken ein Hebel (20) vorgesehen ist, der einen Bestandteil der Mittel zum Lösen der Klemmbacken (13, 14) bildet.

5. Vorrichtung nach einem der vorherstehenden Ansprüche, **dadurch gekennzeichnet, dass** die Rolle (8) und die Klemmbacken (13, 14) so hintereinander angeordnet sind, dass das Gurtband (9) ohne Richtungsumkehr innerhalb der Vorrichtung geführt ist.

6. Vorrichtung nach einem der vorstehenden Ansprüche, **dadurch gekennzeichnet, dass** die Klemmbacken (13, 14) und deren Vorsprung (18, 19) und ggf. auch der Hebel (20) einstückig und aus einem Strangprofilabschnitt gebildet sind.

7. Vorrichtung nach einem der vorstehenden Ansprüche, **dadurch gekennzeichnet, dass** die Klemmbacken (13, 14) auf im Traggestell (1) angeordneten Achsen (15) gelagert sind, wobei zwischen Achse (15) und Klemmbacke (13, 14) eine Schraubenfeder (17) vorzugsweise vorgespannt als Torsionsfeder angeordnet ist.

## Claims

1. A device for winding, tensioning and blocking a belt (9) of a belt restraint system, in particular for children, with a carrier structure (1) which is provided for the fastening on the seat side or vehicle side, with a roller (8) which is mounted in the carrier structure (1) for winding up the belt (9) and which is biased in the winding-up direction (11), with two clamping jaws (13, 14) which are arranged in the carrier structure (1) and automatically block the belt (9) and with means (20) for releasing the clamping jaws, wherein the two clamping jaws are coupled to one another in movement in a mechanical manner, **characterised in that** - seen in the winding-up direction (11) - the first clamping jaw (13) automatically blocks the belt (9) in the winding-up direction (11), and the second clamping jaw (14) automatically blocks the belt (9) in the winding-off direction.

2. A device according to claim 1, **characterised in that** the clamping jaws (13, 14) are pivotally arranged within the carrier structure (1) and are spring-biased in the clamping direction.

3. A device according to claim 1 or 2, **characterised in that** the clamping jaws (13, 14) are coupled in movement at least in the opening direction (S1, S2) of the damping jaws (13, 14), via two projections (18, 19) which in each case face the other clamping jaw and are engaged to one another.

4. A device according to claim 1, 2, and 3, **characterised in that** a lever (20) is provided on one (14) of the clamping jaws, said lever forming a constituent of the means for releasing the clamping jaws (13, 14).

5. A device according to one of the preceding claims, **characterised in that** the roller (8) and the clamping jaws (13, 14) are arranged one after the other such that the belt (9) is guided within the device without direction reversal.

6. A device according to one of the preceding claims, **characterised in that** the clamping jaws (13, 14) and their projection (18, 19), and, as the case may be the lever (20), are formed as one piece and from an extrusion profile section.

7. A device according to one of the preceding claims, **characterised in that** the clamping jaws (13, 14) are mounted on arbors (15) arranged in the carrier structure (1), wherein a helical spring (17) preferably biased as a torsion spring, is arranged between the arbor (15) and the clamping jaw (13, 14).

## Revendications

1. Dispositif pour enrouler, tendre et bloquer une sangle (9) d'un système de retenue à sangles, en particulier pour des enfants, comprenant un bâti support (1), qu'il est prévu de fixer côté siège ou côté véhicule, une bobine (8) montée dans le bâti support (1) pour l'enroulement de la sangle (9), qui est précontrainte dans le sens d'enroulement (11), deux mâchoires de serrage (13, 14) disposées dans le bâti support (1) et bloquant automatiquement la sangle (9), et des moyens (20) pour le desserrage des mâchoires de serrage, les deux mâchoires de serrage étant couplées entre elles de façon mécanique dans leur mouvement, **caractérisé en ce que**, vues dans le sens d'enroulement (11), la première mâchoire de serrage (13) bloque automatiquement la sangle (9) dans le sens d'enroulement (11) et la seconde mâchoire de serrage (14) bloque automatiquement la sangle (9) dans le sens de déroulement.

2. Dispositif selon la revendication 1, **caractérisé en ce que** les mâchoires de serrage (13, 14) sont disposées avec une liberté de pivotement à l'intérieur du bâti support (1) et sont précontraintes par un ressort dans le sens de serrage.

3. Dispositif selon la revendication 1 ou 2, **caractérisé en ce que** les mâchoires de serrage (13, 14) sont couplées dans leur mouvement au moyen de deux saillies (18, 19) dirigées chacune vers l'autre mâchoire de serrage et se mettant en prise l'une avec l'autre, au moins dans le sens d'ouverture (S 1, S 2) des mâchoires de serrage (13, 14).

4. Dispositif selon les revendications 1, 2 et 3, **caractérisé en ce qu'**un levier (20), qui forme un composant des moyens pour le desserrage des mâchoires de serrage (13, 14), est prévu sur l'une (14) des mâchoires de serrage.

5. Dispositif selon l'une des revendications précédentes, **caractérisé en ce que** la bobine (8) et les mâchoires de serrage (13, 14) sont disposées les unes derrière les autres de telle sorte que la sangle (9) soit guidée sans inversion de direction à l'intérieur du dispositif.

6. Dispositif selon l'une des revendications précédentes, **caractérisé en ce que** les mâchoires de serrage (13, 14) et leur saillie (18, 19), et le cas échéant aussi le levier (20), sont formés d'une seule pièce et en une partie de profilé extrudé.

7. Dispositif selon l'une des revendications précédentes, **caractérisé en ce que** les mâchoires de serrage (13, 14) sont montées sur des axes (15) disposés dans le bâti support (1), un ressort hélicdidal (17) étant disposé, de préférence de façon précontrainte sous la forme d'un ressort de torsion, entre l'axe (15) et la mâchoire de serrage (13, 14).
